# FASCICULE DE BREVET EUROPEEN

(11) **EP 3 699 092 B1**
(45) Date de publication et mention de la délivrance du brevet: **21.04.2021**
(21) Numéro de dépôt: 20155439.1
(22) Date de dépôt: 04.02.2020
(51) Int. Cl.: B64D 27/26, B23P 19/12, B64F 5/10, F16B 5/02, F16B 19/02, B23P 19/10, F16B 4/00, F16B 21/02

(54) **ENSEMBLE DE PIÈCES ASSEMBLÉES PAR UN ARBRE TRAVERSANT POUVANT ÊTRE MONTÉ EN CAS D'ALIGNEMENT APPROXIMATIF ENTRE LES PIÈCES**
GRUPPE VON TEILEN, DIE MITTELS EINER DURCHGEHENDEN WELLE MONTIERT WERDEN KÖNNEN, WENN DIE TEILE NÄHERUNGSWEISE ANEINANDERGEREIHT SIND
SET OF PIECES ASSEMBLED BY A THROUGH-SHAFT MOUNTABLE WHEN THE PIECES ARE APPROXIMATELY LINED UP

(30) Priorité: 22.02.2019 FR 1901814
(43) Date de publication de la demande: 26.08.2020
(73) Titulaire: AIRBUS OPERATIONS (S.A.S.), 31060 Toulouse (FR)
(72) Inventeur: PAUTIS, Olivier, 31060 Toulouse Cedex 9 (FR); COLMAGRO, Jérôme, 31060 Toulouse Cedex 9 (FR)
(74) Mandataire: Gicquel, Olivier Yves Gérard

(56) Documents cités:
- EP-A1- 2 371 713
- EP-A2- 1 129 942
- FR-A1- 2 891 245
- US-A1- 2017 182 643

## Description

La présente invention concerne le domaine des assemblages mécaniques réalisés à l'aide d'un arbre traversant plusieurs pièces.

Elle s'applique en particulier au domaine aéronautique. Notamment, elle est particulièrement adaptée à la réalisation d'une liaison entre un groupe propulseur d'aéronef et un mât de support d'un tel groupe propulseur.

Cet exemple d'application, non limitatif, est employé ci-après pour illustrer l'invention.

Un groupe propulseur d'aéronef qui comporte de manière générale un moteur qui entraîne une soufflante et qui est maintenu et caréné dans une nacelle, est fixé à la structure de l'aéronef par un mât de support.

Les groupes propulseurs d'aéronef commerciaux sont, selon la configuration d'aéronef la plus commune, attachés à la voilure de l'aéronef par sa surface inférieure, appelée intrados. Chaque groupe propulseur d'un aéronef (qui peut par exemple en comporter deux ou quatre) est généralement installé à l'avant de cette voilure, c'est-à-dire monté en porte à faux en avant du bord d'attaque de la voilure, sous le niveau de ladite voilure.

Le mât de support constitue le support mécanique entre un ensemble de propulsion ou groupe propulseur, et la structure de l'aéronef, par exemple au niveau de sa voilure ou de son fuselage. Le mât de support comprend une structure primaire qui permet la reprise et la transmission des efforts auxquels est soumis le mât, et une structure secondaire correspondant essentiellement à un carénage aérodynamique qui n'a pas de rôle structural.

Les efforts importants s'appliquant entre le groupe propulseur et la structure primaire du mât de support sont transmis au niveau d'interfaces de liaison, par exemple au nombre de deux, à savoir une interface avant située vers l'avant du mât de support et une interface arrière généralement située entre l'arrière du groupe propulseur et une zone par exemple médiane (longitudinalement) du mât de support.

Au niveau de l'interface arrière, l'accès est limité. L'interface comporte elle-même plusieurs liaisons. Chaque liaison est réalisée par un arbre traversant plusieurs orifices ménagés respectivement dans des pattes (aussi appelées « chapes femelles ») formées sur le groupe propulsif d'une part et sur le mât de support d'autre part. Une (ou plusieurs) pièce intermédiaire appelée « manille » peut être employée entre le mât et le groupe propulsif, de sorte que chaque arbre traverse soit une ou plusieurs pattes du mat et la manille, ou une ou plusieurs pattes du groupe propulsif et la manille.

Pour limiter les contraintes liées au moment de flexion dans l'arbre, une liaison en chape est préférée à une liaison en porte à faux. Typiquement, la manille (ou autre pièce) est introduite entre deux pattes du mât de support ou la nacelle. Alternativement, une patte du mât de support ou la nacelle est introduite entre deux pattes de l'autre élément.

Les deux pattes entre lesquelles est introduite la manille ou une patte de l'autre élément forment ainsi une chape, comportant deux orifices alignés.

Les pièces assemblées n'ayant pas vocation à tourner l'une par rapport à l'autre, et au vu des contraintes à supporter, une absence ou une quasi-absence de jeu est nécessaire entre l'arbre et les pièces qu'il traverse.

Il résulte de telles liaisons que la mise en place de l'arbre nécessite un parfait alignement entre les orifices des pattes et le cas échéant celui de la manille. Obtenir un bon alignement permettant de mettre l'arbre en place est complexe du fait de la nécessaire absence de jeu, de la masse et de l'encombrement des pièces à assembler, et de la multiplicité des liaisons à former entre les pièces.

FR 2 891 245 A1 divulgue un ensemble de pièces assemblées comprenant un arbre traversant un premier orifice d'une première pièce et un deuxième orifice d'une deuxième pièce de sorte à assembler celles-ci.

L'invention vise à proposer une liaison mécanique par arbre traversant les pièces à assembler, adaptée à un usage aéronautique en particulier dans la liaison entre un groupe propulseur d'aéronef et un mât de support, facilitant l'assemblage en particulier vis-à-vis de la problématique d'alignement des orifices que comportent les pièces.

Ainsi, l'invention porte sur un ensemble de pièces assemblées entre elles comportant une première pièce comportant un premier orifice traversant, une deuxième pièce comportant un deuxième orifice traversant, qui est aligné avec le premier orifice de la première pièce, un arbre de section constante, traversant le premier orifice et le deuxième orifice de sorte à assembler la première pièce et la deuxième pièce. L'arbre a une surface externe basée sur un cylindre de révolution ayant un diamètre de base et présente, vu en section transversale, sur deux arcs de sa surface externe diamétralement opposés, une surépaisseur régulière, de sorte que la section de l'arbre présente un diamètre épaissi sur lesdits arcs, le diamètre épaissi étant supérieur au diamètre de base. Le premier orifice et le deuxième orifice présentent chacun, vus en section transversale, deux premières portions diamétralement opposées sur lesquelles le pourtour de l'orifice présente un premier diamètre correspondant au diamètre épaissi de l'arbre, et deux deuxièmes portions diamétralement opposées sur lesquelles le pourtour de l'orifice présente un deuxième diamètre supérieur au premier diamètre. Les deuxièmes portions du pourtour de l'orifice sont de longueur sensiblement égale ou supérieure à la longueur des arcs de la surface externe de l'arbre qui présentent une surépaisseur. Le premier orifice et le deuxième orifice sont alignés et orientés en correspondance l'un par rapport à l'autre.

L'arbre peut ainsi adopter deux positions angulaires. Dans une position angulaire, les portions de la surface de l'arbre présentant une surépaisseur sont au contact des parties des orifices de plus petit diamètre. Cela assure une liaison sans jeu entre les deux pièces assemblées via l'arbre. Dans une autre position angulaire, les portions de la surface de l'arbre présentant une surépaisseur sont en regard des parties des orifices de plus grand diamètre. Les parties des orifices de plus petit diamètre sont alors en regard de portions de la surface de l'arbre sans surépaisseur. Dans une telle position, un jeu est créé tout autour de l'arbre, ce qui facilite la mise en place de l'arbre, notamment en cas d'alignement approximatif entre les orifices des deux pièces à assembler.

Dans un tel ensemble, la première pièce peut comporter une première branche comportant le premier orifice traversant et une deuxième branche, sensiblement parallèle à la première branche, comportant un troisième orifice traversant, le premier orifice et le troisième orifice étant en regard l'un de l'autre, de sorte que les deux branches forment une chape. La deuxième pièce comportant le deuxième orifice est alors positionnée en partie dans la chape formée entre la première et la deuxième branche, le premier, le deuxième et le troisième orifice étant alignés et orientés en correspondance entre eux, l'arbre traversant le premier, le deuxième, et le troisième orifice.

L'arbre peut comporter, à une extrémité, un élément permettant son actionnement en rotation. Par exemple, l'élément permettant l'actionnement en rotation de l'arbre peut être une empreinte hexagonale, carrée, ou triangulaire. Selon un autre exemple, l'élément permettant l'actionnement en rotation de l'arbre peut être une excroissance formant levier.

Les arcs de la surface de l'arbre présentant une surépaisseur s'étendent sur moins de 90° d'angle, par exemple sur 20° à 45° d'angle, par exemple sur 30° d'angle.

La deuxième pièce peut être une manille comportant deux orifices pour la réalisation d'une liaison avec la première pièce d'une part, et une liaison avec une troisième pièce d'autre part, et les premières portions de pourtour de premier diamètre de chacun des deux orifices de manille sont symétriques de part et d'autre d'un axe qui relie le centre desdits deux orifices.

La deuxième pièce peut comporter trois orifices pour la réalisation de trois liaisons, dont au moins une liaison avec la première pièce, et chaque droite reliant le centre d'un orifice au centre d'un autre desdits trois orifices passe par les premières portions de premier diamètre des pourtours des orifices dont elle relie les centres. L'invention porte à titre d'exemple sur un tel ensemble dans lequel :
- la première pièce est un mât de support d'un groupe propulsif d'aéronef, et la deuxième pièce est un groupe propulsif d'aéronef ou une manille ou une pièce intermédiaire liée à un groupe propulsif d'aéronef, ou
- la première pièce est un groupe propulsif d'aéronef, et la deuxième pièce est un mât de support d'un groupe propulsif d'aéronef ou une manille ou une pièce intermédiaire liée à un mât de support d'un groupe propulsif d'aéronef.

L'invention porte aussi sur un procédé d'assemblage d'un ensemble tel que précédemment décrit, ledit procédé comportant :
- l'alignement au moins approximatif du premier orifice et du deuxième orifice;
- la mise en place de l'arbre au travers desdits premier et deuxième orifices, en alignant les arcs de la surface dudit arbre portant une surépaisseur avec les deuxièmes portions de deuxième diamètre des pourtours desdits premier et deuxième orifices;
- la rotation de l'arbre de sorte à amener lesdits arcs de la surface dudit arbre portant une surépaisseur en contact avec les portions de premier diamètre des pourtours des premier et deuxième orifices.

D'autres particularités et avantages de l'invention apparaîtront encore dans la description ci-après.
Aux dessins annexés, donnés à titre d'exemples non limitatifs :
[Fig. 1] la figure 1 représente selon une vue en trois dimensions, un exemple de liaison entre un mât de support et un groupe propulsif d'aéronef, constituant une application préférentielle de l'invention ;
[Fig. 2] la figure 2 représente, selon une vue schématique, la problématique résolue par l'invention ;
[Fig. 3] la figure 3 représente, selon une vue schématique, une pièce d'un ensemble conforme à un mode de réalisation de l'invention et un arbre correspondant, dans une première position dite « position désengagée »;
[Fig. 4] la figure 4 représente, selon la vue de la figure 3, la pièce et l'arbre de la figure 3 dans une seconde position dite « position engagée »;
[Fig. 5] la figure 5 représente, selon une vue schématique, un premier exemple d'élément permettant la rotation de l'arbre pour son réglage angulaire ;
[Fig. 6] la figure 6 représente, selon une vue schématique, un deuxième exemple d'élément permettant la rotation de l'arbre ;
[Fig. 7] la figure 7 représente, selon une vue schématique, un aspect d'un exemple de pièce pouvant être mis en œuvre dans l'invention ;
[Fig. 8] la figure 8 représente, selon une vue schématique en trois dimensions, un exemple d'arbre pouvant être mis en œuvre dans l'invention ;
[Fig. 9] la figure 9 représente, selon une vue schématique, un orifice traversant d'une pièce mise en œuvre dans un mode de réalisation de l'invention ;
[Fig. 10] la figure 10 représente, selon une vue schématique, une manille adaptée à être mise en œuvre dans un ensemble conforme à l'invention ;
[Fig. 11] la figure 11 représente, selon une vue schématique, un aspect d'un mode de réalisation de l'invention ;
[Fig. 12] la figure 12 représente, selon une vue schématique, une seconde problématique résolue par l'invention.

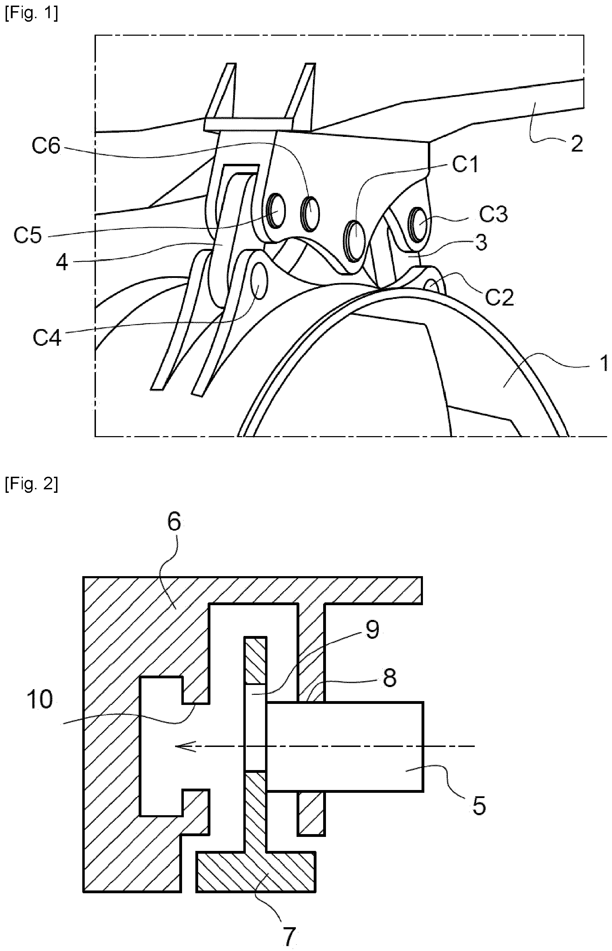

La figure 1 présente, à titre d'exemple illustrant un assemblage dans lequel l'invention peut être mise en œuvre, une interface de liaison entre groupe propulseur d'aéronef 1 et un mât de support 2. L'interface représentée à titre d'exemple est située dans une position longitudinale sensiblement médiane du mât de support, et vers l'arrière du groupe propulseur.

A ce niveau, le groupe propulseur 1 est essentiellement suspendu sous le mât de support 2.

Un ensemble de chapes C1...C6 est réalisé pour constituer la liaison entre le groupe propulseur 1 et le mât de support 2.

Une liaison en chape correspond à une liaison comportant une première pièce formant deux branches ou pattes parallèles, en U, une seconde pièce insérée entre les deux branches du U, et un axe traversant lesdites branches de la première pièce ainsi que la deuxième pièce.

Dans l'exemple représenté, les différentes liaisons en chape C1...C6 sont réalisées soit directement entre le groupe propulseur 1 et le mât de support 2, soit entre groupe propulseur et une pièce intermédiaire telle qu'une manille liée par ailleurs au mât de support, soit entre le mât de support et une pièce intermédiaire liée par ailleurs au groupe propulseur.

En particulier, les liaisons suivantes sont mises en œuvre :
C1 : liaison entre le mâte de support 2 et le groupe propulseur 1 ;
C2 : liaison entre le groupe propulseur 1 et une manille 3 ;
C3 : liaison entre le mât de support 2 et la manille 3 ;
C4 : liaison entre le groupe propulseur 1 et une pièce intermédiaire 4 ;
C5 et C6 : liaisons entre le mât de support 2 et la pièce intermédiaire 4.

Chacune de ces liaisons se fonde sur le principe représenté à la figure 2, consistant à insérer un arbre 5 dans des orifices traversants formés dans une première pièce 6 et dans une deuxième pièce 7. En particulier, l'arbre 5 traverse successivement un premier orifice 8 de la première pièce 6, un deuxième orifice 9 de la deuxième pièce 7, et un troisième orifice 10 de la première pièce 6.

Il est important qu'aucun jeu ne subsiste dans l'assemblage une fois la première pièce 6 et la deuxième pièce 7 assemblées par l'arbre 5. Pour cette raison, l'alignement relatif entre les orifices au travers desquels l'arbre 5 doit être positionné doit être parfait pour permettre le passage de l'arbre. La figure 2 illustre de manière très schématique un alignement imparfait, constituant une situation dans laquelle le montage de l'arbre est impossible du fait de l'interférence mécanique entre l'arbre et la deuxième pièce 7. Obtenir un alignement parfait est cependant d'autant plus compliqué que les pièces mises en œuvre sont lourdes ou volumineuses, ce qui est par exemple le cas d'un groupe propulseur d'aéronef. En outre, le nombre important de liaisons à constituer au niveau de la même interface complexifie encore plus l'alignement des pièces.

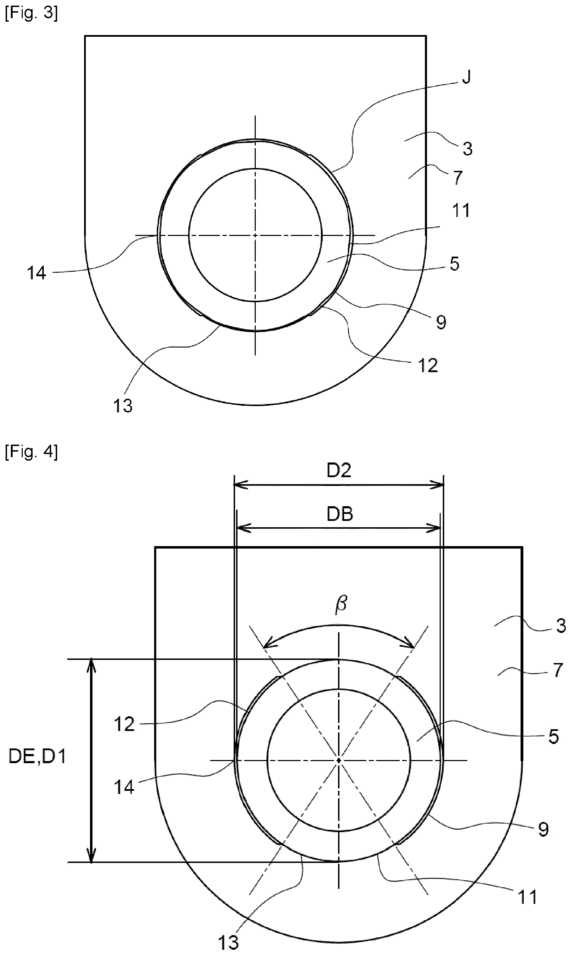

La figure 3 illustre le principe développé dans l'invention permettant d'apporter une solution à cette problématique. La figure 3 représente une extrémité de la manille 3. La manille 3 comporte un orifice traversant, correspondant en l'occurrence au deuxième orifice 9 traversant. L'arbre 5 traverse l'orifice de la manille 3.

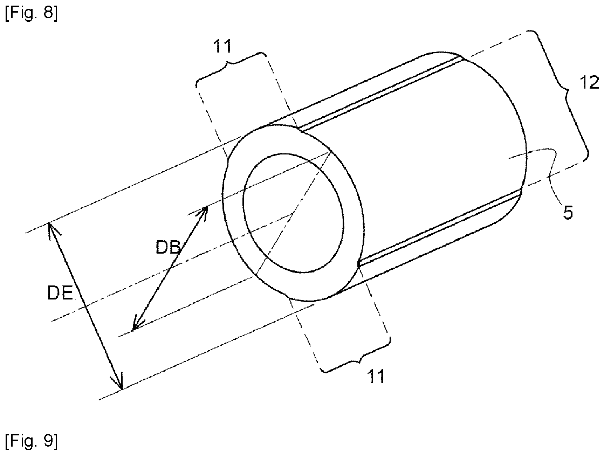

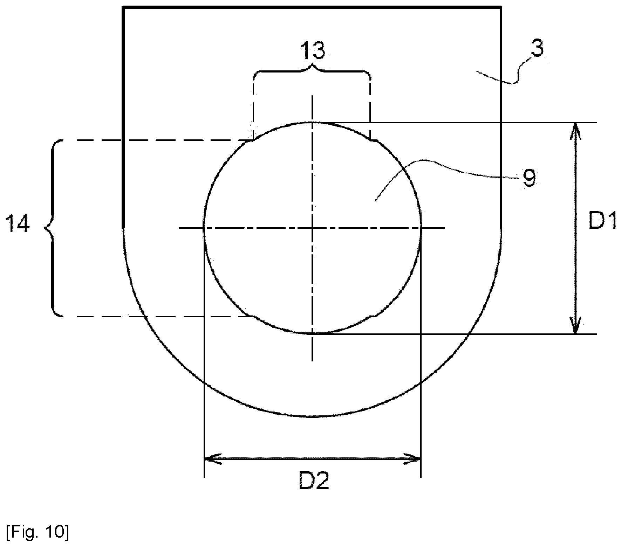

Plus de détails concernant l'arbre 5 et l'orifice de la manille 3 sont décrits ci-après en référence respectivement aux figures 8 et 9.

La figure 8 représente l'arbre 5. Il s'agit dans l'exemple représenté d'un arbre creux, mais il pourrait s'agir d'un arbre plein sans sortir du cadre de l'invention.

L'arbre 5 a une section transversale constante. Comme cela est visible à la figure 8, la section de l'arbre est sensiblement cylindrique de révolution. Mais, contrairement à un arbre traditionnellement utilisé, l'arbre 5 n'est pas purement cylindrique de révolution, il présente à sa surface deux zones épaissies diamétralement opposées. Ainsi, vu en section, l'arbre 5 présente deux arcs 11 diamétralement opposés présentant une surépaisseur comparativement au reste de la surface de l'arbre. Vu en section, l'arbre 5 présente donc deux arcs 11 diamétralement opposés au niveau desquels l'arbre a un diamètre épaissi DE, tandis qu'il présente un diamètre de base DB (inférieur au diamètre épaissi DE) sur le reste de sa surface.

La transition entre les surfaces de l'arbre 5 présentant le diamètre de base et celles présentant le diamètre épaissi est réalisée de manière douce, par des surfaces arrondies, ou au moins de manière progressive. Cela évite une variation de section trop brutale qui pourrait être préjudiciable au comportement mécanique de l'arbre, notamment en cas de sollicitation selon des cycles de chargements répétés pouvant entraîner une fatigue mécanique.

Les arcs 11 de l'arbre présentant une surépaisseur s'étendent chacun sur moins de 90° d'angle, de sorte que la majorité de la surface ne présente pas de surépaisseur par rapport au diamètre de base DB. Notamment, ces arcs s'étendent sur un angle β de 30° dans l'exemple ici représenté, et tel que montré à la figure 4.

La figure 9 représente le deuxième orifice 9, formé dans la manille 3, et destiné à recevoir l'arbre 8. L'orifice représenté présente une section constante. L'orifice étant vu en section transversale, son pourtour comporte deux premières portions 13 diamétralement opposées ayant un premier diamètre D1 correspondant au diamètre épaissi DE de l'arbre. Par « correspondant », il est entendu que le diamètre épaissi DE peut être introduit sans jeu, ou avec un jeu négligeable, et sans serrement, dans le premier diamètre D1.

Dans l'exemple ici représenté, ces premières portions 13 ont une dimension égale à celle desdits arcs de l'arbre présentant une surépaisseur et s'étendent donc sur un angle de 30°, tel que représenté à la figure 4.

L'orifice présente, sur le reste de son pourtour, c'est-à-dire sur deux deuxièmes portions 14 diamétralement opposées, un deuxième diamètre D2 supérieur à D1. Les deuxièmes portions du pourtour de l'orifice, où l'orifice a le deuxième diamètre D2, sont de longueur au moins égale à la longueur des arcs de l'arbre présentant une surépaisseur, ce qui permet à l'arbre 5 d'adopter la position dite dégagée dans l'orifice.

La transition entre les portions du pourtour de l'orifice présentant le premier diamètre D1 et celles présentant le deuxième diamètre D2 est réalisée de manière douce, par des surfaces arrondies, ou au moins de manière progressive. Cela évite une variation de section trop brutale qui pourrait être préjudiciable au comportement mécanique de la manille, notamment en cas de sollicitation selon des cycles de chargements répétés pouvant entraîner une fatigue mécanique.

La différence entre le premier diamètre et le deuxième diamètre est telle qu'elle est bien visible sur la figure 9 afin d'illustrer un aspect de l'invention, mais dans les modes de réalisation concrets de l'invention cette différence est généralement moindre, par exemple de quelques dixièmes de millimètres. De même, les zones de transition entre les portions de premier diamètre et de deuxième diamètre apparaissent significatives sur la figure 9, mais sont en pratique généralement de dimensions négligeables comparativement aux dimensions des portions de pourtour de l'orifice de premier diamètre et de deuxième diamètre.

Ainsi, les relations suivantes sont établies :
- DB est inférieur à DE ;
- DE est égal à D1 à un jeu négligeable près permettant d'introduire sans contrainte un arbre de diamètre DE dans un orifice de diamètre D1, et
- D1 est inférieur à D2.

Ainsi, comme représenté à la figure 3, il est possible d'introduire l'arbre 5 dans le deuxième orifice 9 en mettant les arcs diamétralement opposés 11 présentant une surépaisseur en regard avec les portions de l'orifice où le pourtour de ce dernier présente le deuxième diamètre D2. Dans ce cas, les portions du pourtour de l'orifice ayant le premier diamètre D1 sont en regard de surfaces de l'arbre qui ne présentent pas de surépaisseur.

Il en résulte que dans cette position, dite position « désengagée », et tel que cela est représenté à la figure 3, l'arbre présente autour de l'ensemble de sa surface externe un jeu J vis-à-vis de l'orifice dans lequel il est introduit. Ce jeu périphérique facilite la mise en place de l'arbre dans l'orifice.

La première pièce 6 et la deuxième pièce 7 présentent chacune un orifice ainsi configuré. Le premier orifice 8 de la première pièce 6 et le deuxième orifice 9 de la deuxième pièce 7 sont en outre sensiblement orientés en correspondance, de sorte que l'introduction de l'arbre peut se faire avec un jeu périphérique vis-à-vis du premier orifice 8 et du deuxième orifice 9. Orienté en correspondance signifie que les premières portions de premier diamètre D1 du premier orifice 8 sont en regard des premières portions de premier diamètre D1 du deuxième orifice 9, et que les deuxièmes portions de deuxième diamètre D2 du premier orifice 8 sont en regard des deuxièmes portions de deuxième diamètre D2 du deuxième orifice 9.

Il est ainsi possible d'insérer avec jeu l'arbre de sorte à ce qu'il traverse la première pièce 6 et la deuxième pièce 7, même lorsque l'alignement entre le premier orifice 8 et le deuxième orifice 9 est imparfait.

Ce principe reste valable et reproductible avec un troisième orifice, par exemple pour la constitution d'une liaison chape, voire avec plus d'orifices et/ou de pièces à assembler.

La figure 4 représente la manille 3 et l'arbre 5 représenté à la figure 3, l'arbre 5 ayant été tourné de 90° autour de son axe principal.

Dans la position angulaire de l'arbre 5 représentée à la figure 4, dite position « engagée », les arcs 11 diamétralement opposés de l'arbre, présentant une surépaisseur, sont amenés en correspondance avec les premières portions 13 du pourtour de l'orifice ayant le premier diamètre D1. Il en résulte un contact entre lesdits arcs 11 diamétralement opposés et les premières portions 13, de sorte que l'arbre 5 est maintenu sans jeu dans l'orifice. Dans cette position de l'arbre, une liaison sans jeu est ainsi réalisée. En outre, la rotation de l'arbre 5 pour l'amener dans la position angulaire de la figure 4 a pour conséquence de corriger les éventuels défauts d'alignement des pièces et de leurs orifices respectifs pouvant exister lors de la mise en place de l'arbre.

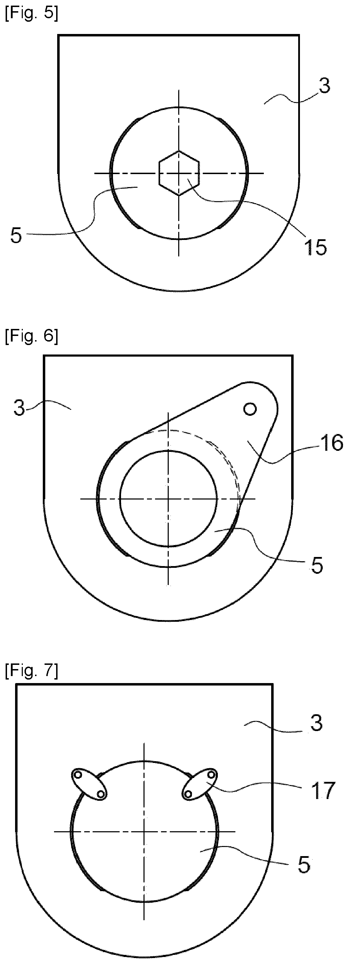

Une rotation de l'arbre pour passer de la position angulaire représentée à la figure 3 à celle représentée à la figure 4 et inversement, ou plus généralement pour permettre le réglage de la position angulaire de l'arbre 5, peut être obtenue par divers moyens. En particulier, l'arbre 5 peut comporter un élément permettant son actionnement en rotation. Tout élément non circulaire peut ainsi convenir. Deux exemples préférentiels sont représentés aux figures 5 et 6.

Ainsi, tel que représenté à la figure 5, l'arbre 5 peut présenter à une de ses extrémités une empreinte 15 permettant d'y introduire un outil de forme correspondante. L'empreinte 15 peut avoir, de manière non exhaustive ni limitative, une forme hexagonale (comme dans l'exemple représenté à la figure 5), triangulaire, carrée, etc.

Bien évidemment, le principe inverse peut être appliqué, à savoir un arbre 5 présentant à une extrémité une forme non circulaire, qui peut être introduite dans un outil présentant une partie femelle correspondante.

Un autre exemple d'élément permettant l'actionnement de l'arbre 5 en rotation est représenté à la figure 6, sous la forme d'une oreille 16. L'oreille 16, liée rigidement à l'arbre 5 ou formée intégralement avec ce dernier, peut être basculée, entrainant la rotation de l'arbre. Bien évidemment, selon le principe illustré à la figure 6, toute excroissance géométrique peut être employée pour permettre la rotation de l'arbre.

Une fois l'arbre positionné vis-à-vis des divers orifices qu'il traverse dans la position angulaire de la figure 4, la liaison sans jeu entre les pièces à assembler est constituée et l'arbre n'a plus à être tourné lors de l'utilisation des pièces ainsi assemblées. Pour s'assurer que l'arbre 5 ne tourne pas, ce qui pourrait créer dans la liaison un jeu néfaste, des moyens de blocage 17 de l'arbre sont prévus dans un mode de réalisation de l'invention. La figure 7 représente de tels moyens de blocage 17 sous la forme de plaquettes liées d'une part à l'arbre 5, et d'autre part à la manille 3 (ou à toute autre pièce fixe de l'assemblage).

Lorsque l'arbre se trouve dans la position angulaire représentée à la figure 4, seuls les arcs 11 diamétralement opposés de l'arbre présentant une surépaisseur et les premières portions 13 de pourtour de l'orifice de premier diamètre D1 en contact avec lesdits arcs participent à la liaison et permettent la transmission des efforts qui y sont appliqués. Il est donc préférable que les dimensions de ces arcs et portions soient égales ou proches pour maximiser les surfaces de contact.

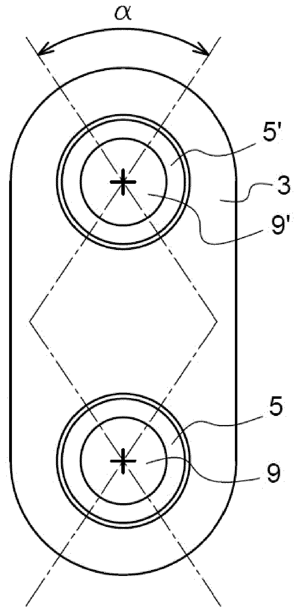

Une manille 3 telle que celle qui est représentée à la figure 10 est adaptée à transmettre essentiellement des efforts de traction et de compression appliqués selon un axe A reliant le centre des deux deuxièmes orifices 9, 9' qui y sont ménagés. Deux arbres 5, 5' y sont positionnés.

Sur la surface de contact en arc de cercle qui est formée entre chaque arbre 5, 5' et l'orifice dans lequel il est monté, les efforts de traction s'appliquent essentiellement sur un angle α de 30°, réparti symétriquement de part et d'autre de l'axe A. Ainsi, l'angle β d'extension des arcs de l'arbre présentant une surépaisseur et en correspondance des portions de l'orifice de pourtour de premier diamètre D1, est particulièrement bien adapté à cette configuration. En outre, les portions de pourtour de premier diamètre D1 de chacun des deux orifices de la manille 3 sont symétriques de part et d'autre de l'axe A.

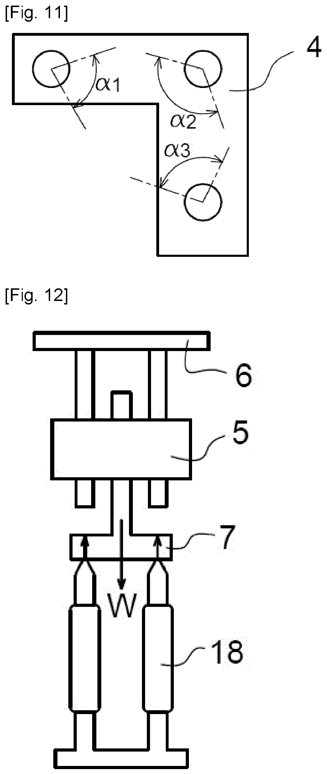

La figure 11 représente une pièce intermédiaire 4, dont la géométrie correspond sensiblement à celle de la pièce intermédiaire 4 de la figure 1. Cette pièce comporte trois orifices pour la réalisation de trois liaisons selon le principe développé dans l'invention. Dans la configuration représentée, les efforts appliqués à la pièce sont essentiellement diffusés, au niveau des trois liaisons, selon des angles de diffusion respectifs α₁, α₂ et α₃ différents en valeur et en orientation. Dans de telles configurations notamment, la valeur de l'angle β sur lequel s'étendent les surépaisseurs et le cas échéant les portions de pourtour d'orifice de premier diamètre D1 peut être augmentée par exemple jusqu'à 90°. En outre, chaque droite reliant le centre d'un orifice au centre d'un autre orifice de pièce intermédiaire 4 passe par les portions de pourtour de premier diamètre des orifices dont elle relie les centres. Ceci permet de garantir que chaque liaison formée est configurée pour reprendre les efforts qui lui sont appliqués.

La figure 12 illustre un deuxième avantage procuré par l'invention, dans le cadre du démontage d'une liaison constituée comme décrit précédemment. La figure 12 représente schématiquement l'assemblage entre une première pièce 6 et une deuxième pièce 7 grâce à un axe 5. Le démontage de cet assemblage est obtenu par retrait de l'axe 5. Néanmoins, lorsque l'assemblage est sous contrainte (par exemple, lorsqu'un groupe propulseur 1 d'aéronef formant la deuxième pièce 7 est suspendu à un mât de support 2 formant la première pièce 6, et que son poids W s'applique en tout ou partie dans la liaison), le retrait de l'arbre 5 est difficile voire impossible. Pour permettre le retrait de l'arbre, il est nécessaire de prévoir des moyens porteurs 18 pour compenser le poids W de la deuxième pièce 7 et annuler les efforts qu'il génère dans la liaison. Si les moyens porteurs 18 ne sont pas en mesure d'annuler complètement des efforts dans la liaison, ce qui correspond à un alignement parfait et sans contrainte des orifices de la première pièce 6 et de la deuxième pièce 7, l'arbre demeure difficile à extraire.

En mettant en œuvre un assemblage conforme à l'invention, cette problématique est également résolue. Pour permettre le démontage d'un tel assemblage, l'arbre 5 est tourné de la position angulaire représentée à la figure 4 à la position angulaire représentée à la figure 3 (après retrait, le cas échéant, des moyens de blocage 17). Dans ce cas, un jeu périphérique est formé autour de l'arbre, même si les moyens porteurs 18 n'assurent pas un alignement parfait des orifices de la première pièce 6 et de la deuxième pièce 7. Ce jeu permet une extraction aisée de l'arbre. De même, si plusieurs liaisons sont mises en œuvre comme dans l'exemple de la figue 1, il est possible d'extraire un à un les arbres de chaque liaison (et le cas échéant de les remettre en place) tant que suffisamment de liaisons restent constituées par ailleurs pour reprendre les efforts qui étaient supportés par la liaison dont l'arbre est extrait.

L'invention ainsi développée permet la constitution d'un ensemble par assemblage entre deux pièces ou plus, à l'aide d'un arbre traversant lesdites pièces, et permet de palier à la difficulté d'obtenir un alignement parfait entre les orifices traversés par l'arbre. Elle permet corolairement un démontage aisé de l'assemblage, même lorsque des contraintes s'y appliquent encore. Elle peut s'appliquer à tout domaine dans lequel un assemblage mécanique par arbre traversant plusieurs pièces est mis en œuvre. Elle trouve des applications particulières dans le domaine de l'aéronautique, et est particulièrement adaptée à la formation de liaisons au niveau d'une interface entre un groupe propulseur d'aéronef et un mât de support.

## Revendications

1. Ensemble de pièces assemblées entre elles comportant :
- une première pièce (6) comportant un premier orifice (8) traversant,
- une deuxième pièce (7) comportant un deuxième orifice (9) traversant, qui est aligné avec le premier orifice (8) de la première pièce (6),
- un arbre (5) de section constante, traversant le premier orifice (8) et le deuxième orifice (9) de sorte à assembler la première pièce (6) et la deuxième pièce (7), **caractérisé en ce que**
l'arbre (5) a une surface externe basée sur un cylindre de révolution ayant un diamètre de base (DB) et présente, vu en section transversale, sur deux arcs (11) de sa surface externe diamétralement opposés, une surépaisseur régulière, de sorte que la section de l'arbre présente un diamètre épaissi (DE) sur lesdits arcs (11), le diamètre épaissi (DE) étant supérieur au diamètre de base (DB), ,
et **en ce que** le premier orifice (8) et le deuxième orifice (9) présentent chacun, vus en section transversale, deux premières portions (13) diamétralement opposées sur lesquelles le pourtour de l'orifice présente un premier diamètre (D1) correspondant au diamètre épaissi (DE) de l'arbre (5), et deux deuxièmes portions (14) diamétralement opposées sur lesquelles le pourtour de l'orifice présente un deuxième diamètre (D2) supérieur au premier diamètre (D1),
lesdites deuxièmes portions (14) du pourtour de l'orifice étant de longueur sensiblement égale ou supérieure à la longueur des arcs (11) de la surface externe de l'arbre (5) qui présentent une surépaisseur,
le premier orifice (8) et le deuxième orifice (9) étant alignés et orientés en correspondance l'un par rapport à l'autre.

2. Ensemble selon la revendication 1, dans lequel la première pièce (6) comporte une première branche comportant le premier orifice (8) traversant et une deuxième branche, sensiblement parallèle à la première branche, comportant un troisième orifice (10) traversant, le premier orifice (8) et le troisième orifice (10) étant en regard l'un de l'autre, de sorte que les deux branches forment une chape,
la deuxième pièce (7) comportant le deuxième orifice (9) étant positionnée en partie dans la chape formée entre la première et la deuxième branche, le premier, le deuxième et le troisième orifice (8,9,10) étant alignés et orientés en correspondance entre eux,
l'arbre (5) traversant le premier, le deuxième, et le troisième orifice (8,9,10).

3. Ensemble selon la revendication 1 ou la revendication 2, dans lequel l'arbre (5) comporte, à une extrémité, un élément permettant son actionnement en rotation.

4. Ensemble selon la revendication 3, dans lequel l'élément permettant l'actionnement en rotation de l'arbre est une empreinte (15) hexagonale, carrée, ou triangulaire.

5. Ensemble selon la revendication 3, dans lequel l'élément permettant l'actionnement en rotation de l'arbre est une excroissance formant levier.

6. Ensemble selon l'une des revendications précédentes dans lequel les arcs (11) de la surface de l'arbre présentant une surépaisseur s'étendent sur moins de 90° d'angle, par exemple sur 20° à 45° d'angle, par exemple sur 30° d'angle.

7. Ensemble selon l'une des revendications précédentes, dans lequel la deuxième pièce (7) est une manille (3) comportant deux orifices pour la réalisation d'une liaison avec la première pièce (6) d'une part et une liaison avec une troisième pièce d'autre part, dans lequel les premières portions (13) de pourtour de premier diamètre (D1) de chacun des deux orifices de manille (3) sont symétriques de part et d'autre d'un axe (A) qui relie le centre desdits deux orifices.

8. Ensemble selon l'une des revendications 1 à 6, dans lequel la deuxième pièce (7) comporte trois orifices pour la réalisation de trois liaisons, dont au moins une liaison avec la première pièce, dans lequel chaque droite reliant le centre d'un orifice au centre d'un autre desdits trois orifices passe par les premières portions (13) de premier diamètre (D1) des pourtours des orifices dont elle relie les centres.

9. Ensemble selon l'une quelconque des revendications précédentes,
dans lequel :
- la première pièce (6) est un mât de support (2) d'un groupe propulsif d'aéronef, et la deuxième pièce est un groupe propulsif d'aéronef (1) ou une manille (3) ou une pièce intermédiaire (4) liée à un groupe propulsif d'aéronef (1), ou
- la première pièce (6) est un groupe propulsif d'aéronef (1), et la deuxième pièce (7) est un mât de support (2) d'un groupe propulsif d'aéronef ou une manille (3) ou une pièce intermédiaire (4) liée à un mât de support (2) d'un groupe propulsif d'aéronef.

10. Procédé d'assemblage d'un ensemble selon l'une des revendications précédentes, comportant :
- l'alignement au moins approximatif du premier orifice (8) et du deuxième orifice (9) ;
- la mise en place de l'arbre (5) au travers desdits premier et deuxième orifices (8,9), en alignant les arcs (11) de la surface dudit arbre (5) portant une surépaisseur avec les deuxièmes portions de deuxième diamètre (D2) des pourtours desdits premier et deuxième orifices (8,9);
- la rotation de l'arbre (5) de sorte à amener lesdits arcs (11) de la surface dudit arbre (5) portant une surépaisseur en contact avec les portions (13) de premier diamètre (D1) des pourtours des premier et deuxième orifices (8,9).

## Patentansprüche

1. Anordnung von zusammengebauten Teilen, welche umfasst:
- ein erstes Teil (6), das eine erste Durchgangsöffnung (8) umfasst,
- ein zweites Teil (7), das eine zweite Durchgangsöffnung (9) umfasst, welche mit der ersten Öffnung (8) des ersten Teils (6) fluchtet,
- eine Welle (5) mit konstantem Querschnitt, welche die erste Öffnung (8) und die zweite Öffnung (9) durchquert, so dass sie das erste Teil (6) und das zweite Teil (7) zusammenfügt,
**dadurch gekennzeichnet, dass**
die Welle (5) eine Außenfläche aufweist, die auf einem Rotationszylinder mit einem Basisdurchmesser (DB) basiert, und, im Querschnitt gesehen, auf zwei diametral gegenüberliegenden Bögen (11) ihrer Außenfläche eine gleichmäßige Überdicke aufweist, derart, dass der Querschnitt der Welle auf diesen Bögen (11) einen vergrößerten Durchmesser (DE) aufweist, wobei der vergrößerte Durchmesser (DE) größer als der Basisdurchmesser (DB) ist,
und dadurch, dass die erste Öffnung (8) und die zweite Öffnung (9), im Querschnitt gesehen, jeweils zwei diametral gegenüberliegende erste Abschnitte (13) aufweisen, auf denen der Außenumfang der Öffnung einen ersten Durchmesser (D1) aufweist, welcher dem vergrößerten Durchmesser (DE) der Welle (5) entspricht, und zwei diametral gegenüberliegende zweite Abschnitte (14), auf denen der Außenumfang der Öffnung einen zweiten Durchmesser (D2) aufweist, der größer als der erste Durchmesser (D1) ist,
wobei die zweiten Abschnitte (14) des Außenumfangs der Öffnung eine Länge aufweisen, die im Wesentlichen gleich oder größer als die Länge der Bögen (11) der Außenfläche der Welle (5) ist, welche eine Überdicke aufweisen,
wobei die erste Öffnung (8) und die zweite Öffnung (9) miteinander fluchten und übereinstimmend ausgerichtet sind.

2. Anordnung nach Anspruch 1, wobei das erste Teil (6) einen ersten Schenkel umfasst, der die erste Durchgangsöffnung (8) umfasst, und einen im Wesentlichen zu dem ersten Schenkel parallelen zweiten Schenkel, der eine dritte Durchgangsöffnung (10) umfasst, wobei die erste Öffnung (8) und die dritte Öffnung (10) einander gegenüberliegen, so dass die zwei Schenkel ein Gabelstück bilden, wobei das zweite Teil (7), das die zweite Öffnung (9) umfasst, zum Teil in dem zwischen dem ersten und dem zweiten Schenkel ausgebildeten Gabelstück positioniert ist, wobei die erste, die zweite und die dritte Öffnung (8, 9, 10) miteinander fluchten und übereinstimmend ausgerichtet sind,
wobei die Welle (5) die erste, die zweite und die dritte Öffnung (8, 9, 10) durchquert.

3. Anordnung nach Anspruch 1 oder Anspruch 2, wobei die Welle (5) an einem Ende ein Element umfasst, das ihre Drehbetätigung ermöglicht.

4. Anordnung nach Anspruch 3, wobei das Element, das die Drehbetätigung der Welle ermöglicht, eine sechseckige, quadratische oder dreieckige Vertiefung (15) ist.

5. Anordnung nach Anspruch 3, wobei das Element, das die Drehbetätigung der Welle ermöglicht, ein Ansatz ist, der einen Hebel bildet.

6. Anordnung nach einem der vorhergehenden Ansprüche, wobei die Bögen (11) der Oberfläche der Welle, die eine Überdicke aufweisen, sich über einen Winkel von weniger als 90° erstrecken, zum Beispiel über einen Winkel von 20° bis 45°, zum Beispiel über einen Winkel von 30°.

7. Anordnung nach einem der vorhergehenden Ansprüche, wobei das zweite Teil (7) ein Koppelglied (3) ist, das zwei Öffnungen zur Herstellung einer Verbindung mit dem ersten Teil (6) einerseits und einer Verbindung mit einem dritten Teil andererseits umfasst, wobei die ersten Abschnitte (13) des Außenumfangs mit dem ersten Durchmesser (D1) jeder der zwei Öffnungen des Koppelgliedes (3) symmetrisch beiderseits einer Achse (A) sind, welche die Mittelpunkte der zwei Öffnungen verbindet.

8. Anordnung nach einem der Ansprüche 1 bis 6, wobei das zweite Teil (7) drei Öffnungen zur Herstellung von drei Verbindungen umfasst, darunter wenigstens einer Verbindung mit dem ersten Teil, wobei jede Gerade, die den Mittelpunkt einer Öffnung mit dem Mittelpunkt einer anderen der drei Öffnungen verbindet, durch die ersten Abschnitte (13) mit dem ersten Durchmesser (D1) der Außenumfänge der Öffnungen, deren Mittelpunkte sie verbindet, verläuft.

9. Anordnung nach einem der vorhergehenden Ansprüche, wobei:
- das erste Teil (6) ein Pylon (2) einer Luftfahrzeug-Antriebseinheit ist und das zweite Teil eine Luftfahrzeug-Antriebseinheit (1) oder ein Koppelglied (3) oder ein mit einer Luftfahrzeug-Antriebseinheit (1) verbundenes Zwischenstück (4) ist, oder
- das erste Teil (6) eine Luftfahrzeug-Antriebseinheit (1) ist und das zweite Teil (7) ein Pylon (2) einer Luftfahrzeug-Antriebseinheit oder ein Koppelglied (3) oder ein mit einem Pylon (2) einer Luftfahrzeug-Antriebseinheit verbundenes Zwischenstück (4) ist.

10. Verfahren zum Zusammenbau einer Anordnung nach einem der vorhergehenden Ansprüche, welches umfasst:
- das wenigstens annähernde Ausrichten der ersten Öffnung (8) und der zweiten Öffnung (9) zueinander;
- das Anbringen der Welle (5) durch die erste und die zweite Öffnung (8, 9) hindurch, indem die Bögen (11) der Oberfläche der Welle (5), die eine Überdicke tragen, zu den zweiten Abschnitten mit dem zweiten Durchmesser (D2) der Außenumfänge der ersten und der zweiten Öffnung (8, 9) ausgerichtet werden;
- das Drehen der Welle (5), so dass die Bögen (11) der Oberfläche der Welle (5), die eine Überdicke tragen, in Kontakt mit den Abschnitten (13) mit dem ersten Durchmesser (D1) der Außenumfänge der ersten und der zweiten Öffnung (8, 9) gebracht werden.

## Claims

1. Assembly of parts assembled with one another, comprising:
- a first part (6) comprising a first through-orifice (8),
- a second part (7) comprising a second through-orifice (9) which is aligned with the first orifice (8) of the first part (6),
- a shaft (5) of constant section, passing through the first orifice (8) and the second orifice (9) so as to assemble the first part (6) and the second part (7), **characterized in that**
the shaft (5) has an external surface based on a cylinder of revolution having a base diameter (DB) and has, when viewed in transverse section, over two diametrically opposed arcs (11) of its external surface, a uniform thickening, so that the section of the shaft has a thickened diameter (DE) on the said arcs (11), the thickened diameter (DE) being greater than the base diameter (DB),
and **in that** the first orifice (8) and the second orifice (9) each have, viewed in transverse section, two first diametrically opposed portions (13) over which the periphery of the orifice has a first diameter (D1) corresponding to the thickened diameter (DE) of the shaft (5), and two second diametrically opposed portions (14) over which the periphery of the orifice has a second diameter (D2) greater than the first diameter (D1),
the said second portions (14) of the periphery of the orifice being of a length substantially equal to or greater than the length of the arcs (11) of the external surface of the shaft (5) which have a thickening,
the first orifice (8) and the second orifice (9) being aligned and oriented in register with one another.

2. Assembly according to Claim 1, in which the first part (6) comprises a first branch comprising the first through-orifice (8) and a second branch, substantially parallel to the first branch, comprising a third through-orifice (10), the first orifice (8) and the third orifice (10) facing one another so that the two branches form a clevis,
the second part (7) comprising the second orifice (9) being positioned partially in the clevis formed between the first and the second branch, the first, the second and the third orifice (8, 9, 10) being aligned and oriented in register with one another,
the shaft (5) passing through the first, the second and the third orifices (8, 9, 10).

3. Assembly according to Claim 1 or Claim 2, wherein the shaft (5) comprises, at one end, an element that allows it to be turned.

4. Assembly according to Claim 3, wherein the element allowing the shaft to be turned is a hexagonal, square or triangular socket (15).

5. Assembly according to Claim 3, wherein the element allowing the shaft to be turned is a protrusion forming a lever.

6. Assembly according to one of the preceding claims, wherein the arcs (11) on the surface of the shaft having a thickening extend over less than 90° of angle, for example over 20° to 45° of angle, for example over 30° of angle.

7. Assembly according to one of the preceding claims, wherein the second part (7) is a shackle (3) comprising two orifices to make a connection with the first part (6) on the one hand, and a connection with a third part on the other hand, wherein the first portions (13) of periphery of first diameter (D1) of each of the two orifices in the shackle (3) are symmetric about an axis (A) that connects the centres of the said two orifices.

8. Assembly according to one of Claims 1 to 6, wherein the second part (7) comprises three orifices for making three connections, these including at least one connection with the first part, wherein each straight line connecting the centre of one orifice to the centre of another of the said three orifices passes through the first portions (13) of first diameter (D1) of the peripheries of the orifices the centres of which it connects.

9. Assembly according to any one of the preceding claims,
wherein:
- the first part (6) is an aircraft propulsion unit support pylon (2), and the second part is an aircraft propulsion unit (1) or a shackle (3) or an intermediate part (4) connected to an aircraft propulsion unit (1), or
- the first part (6) is an aircraft propulsion unit (1) and the second part (7) is an aircraft propulsion unit support pylon (2) or a shackle (3) or an intermediate part (4) connected to an aircraft propulsion unit support pylon (2).

10. Method for assembling an assembly according to one of the preceding claims, involving:
- at least approximately aligning the first orifice (8) and the second orifice (9);
- fitting the shaft (5) through the said first and second orifices (8, 9) by aligning the arcs (11) of the surface of the said shaft (5) bearing a thickening with the second portions of second diameter (D2) of the peripheries of the said first and second orifices (8, 9);
- turning the shaft (5) so as to bring the said arcs (11) of the surface of the said shaft (5) bearing a thickening into contact with the portions (13) of first diameter (D1) of the peripheries of the first and second orifices (8, 9).
